# EUROPÄISCHE PATENTSCHRIFT

(11) **EP 3 419 304 B1**
(45) Veröffentlichungstag und Bekanntmachung des Hinweises auf die Patenterteilung: **10.03.2021**
(21) Anmeldenummer: 18172692.8
(22) Anmeldetag: 16.05.2018
(51) Int. Cl.: H04Q 9/00, F17C 13/02

(54) **SYSTEM UND VERFAHREN ZUM FERNÜBERWACHEN EINER MANUELL EINSTELLBAREN ZUSTANDSANZEIGE EINER DRUCKGASFLASCHENANORDNUNG**
SYSTEM AND METHOD FOR REMOTELY MONITORING THE MANUALLY SETTABLE COMPRESSED GAS CYLINDER STATUS DISPLAY
SYSTÈME ET PROCÉDÉ DE SURVEILLANCE À DISTANCE D'UN AFFICHAGE D'ÉTAT À RÉGLAGE MANUEL D'UN DISPOSITIF DE BOUTEILLE DE GAZ COMPRIMÉ

(30) Priorität: 24.06.2017 DE 102017006014
(43) Veröffentlichungstag der Anmeldung: 26.12.2018
(73) Patentinhaber: Messer Group GmbH, 65812 Bad Soden (DE)
(72) Erfinder: DIERCKX, Marc, 24939 Flensburg (DE)
(74) Vertreter: Münzel, Joachim R.

(56) Entgegenhaltungen:
- WO-A1-2016/146765
- DE-A1-102008 058 995
- US-A1- 2010 131 213
- US-A1- 2016 245 426
- US-A1- 2017 002 982

## Beschreibung

Die Erfindung betrifft ein System zum Fernüberwachen einer Druckgasflaschenanordnung mit einer an der Druckgasflaschenanordnung montierten, manuell einstellbaren Anzeigeeinheit zum Einstellen einer Zustandsanzeige zwecks manueller Kenntlichmachung eines Zustandes der Druckgasflaschenanordnung.

Als "Druckgasflaschenanordnung" oder "Anordnung von Druckgasflaschen" soll hier insbesondere sowohl eine einzelne Druckgasflasche als auch eine Anordnung mehrerer, zu einem Druckgasflaschenbündel oder einer Druckbündelstation zusammengefassten Druckgasflaschen verstanden werden, die einen oder mehrere gemeinsame jeweils mit einem Entnahmeventil ausgerüstete Entnahmeanschlüsse zur Entnahme von Gas aufweisen. Als "Druckgasflaschen" sollen hier insbesondere handelsübliche Behälter mit einem Volumen zwischen 5 Litern und 200 Litern zum Speichern von Gasen, insbesondere technischer Gase, wie Luft- oder Edelgase oder Gasgemische, bei einem Fülldruck zwischen 150 bar und 300 bar, verstanden werden.

Informationen über den Zustand von Druckgasflaschen, wie beispielsweise den Füllstand, die Originalität oder Informationen über eine Beschädigung der Flasche stehen derzeit in den meisten Fällen nicht in digitaler Form zur Verfügung, sondern müssen manuell eruiert und ggf. von Hand in eine digitale Verarbeitungseinheit eingegeben werden. So werden beispielsweise Druckgasflaschenanordnungen nach der Befüllung mit einer Banderole oder einem Aufkleber versehen, um einem Benutzer den Füllzustand der Flasche mitzuteilen.

Es wurden bereit Vorschläge gemacht, den Umgang mit Druckgasflaschen zu digitalisieren und einer Fernüberwachung zugänglich zu machen, wobei auch Informationen über Flaschenzustände in digitaler Form bereitgestellt werden können. Beispielsweise beschreibt die US 7 619 523 B2 ein System zur digitalen Lagerüberwachung unter Einsatz von RFIDs. Die WO 2016/146765 A1, die WO 2016/156059 A1 und die WO 2016/146786 A1 beschreiben Kommunikationssysteme, bei denen Flaschenzustände, wie Standort, Fülldruck, Temperatur u. ä. über Sensoren erfasst und von einem an der Druckgasflasche angeordneten Computer verarbeitet werden. Die verarbeiteten Daten werden anschließend auf einer an der Druckgasflasche angeordneten Anzeigeeinheit oder Projektionsfläche angezeigt und können zusätzlich mittels eines RFID- oder NFC-Signals drahtlos an externe Projektionseinheiten übermittelt werden, beispielsweise an einen Computer, ein Mobiltelefon oder eine Datenbrille.

In der US 7 114 510 B2 und der US 8 776 795 B2 werden Ventilanordnungen für Druckgasflaschen für medizinische Gase beschrieben, in denen ein Sensor oder mehrere Sensoren, ein Zeitgeber, ein Prozessor für die Datenverarbeitung, eine Speichereinheit und ein Display integriert sind. Die Sensoren erfassen das Öffnen und Schließen des Handrads zusammen mit einer Information über die Zeitpunkte des jeweiligen Ereignisses. Diese Informationen werden zusammen mit weiteren in der Speichereinheit abgelegten Informationen, wie beispielsweise Kennnummer der Druckgasflasche oder Daten zur deren Befüllung oder Daten von mit dem jeweiligen Gas behandelten Patienten, vom Prozessor verarbeitet und im Display nach einem vorgegebenen Programm angezeigt. Die so erstellten Daten können zudem an eine Rechnereinheit übermittelt und dort weiter verarbeitet werden, beispielsweise zur Erstellung von Daten über die durchgeführte Therapie oder zur Erstellung von Rechnungen

US 2017 002982 A1 offenbart ein Ventil für Druckgasflaschen, insbesondere für den Einsatz im medizinischen Bereich. Das Ventil ist mit einem regulierbaren Ventil zur Begrenzung des Mengendurchflusses ausgerüstet, das wiederum mittels einer Betätigungsglieds in diskreten Stufen manuell eingestellt werden kann.

Diese bekannten Ventilanordnungen sind allerdings in Bau, Installation und Wartung sehr aufwändig, anfällig gegenüber Beschädigungen und vergleichsweise teuer. Ihr Einbau lässt sich wirtschaftlich nur für Druckgasflaschen darstellen, die für hochpreisige Produkt bestimmt sind, wie beispielsweise bestimmte Medizingase. Für den Einbau in Druckgasflaschen für Standardprodukte im Industriegasebereich, wie etwa Schweißschutzgase oder technische Gase, sind sie dagegen kaum geeignet. Ein weiteres Problem ergibt sich dadurch, dass bestimmte Zustände, wie beispielsweise über den Füllstand, eine Verschmutzung oder Beschädigung der Druckgasflaschenanordnung nicht ohne weiteres objektiv über eine maschinelle Messung festgestellt werden können, sondern von der subjektiven Auffassung des Bedieners abhängt, die wiederum auf einer Einschätzung beruht, die mit der jeweiligen Nutzung der Druckgasflasche zusammenhängt. Beispielsweise kann eine noch nicht völlig entleerte Druckgasflasche für einen Benutzer deshalb unbrauchbar sein, weil er für die ihm bevorstehende Aufgabe eine dauerhafte und kontinuierliche Zufuhr von Gas benötigt, was mit der noch in der Druckgasflasche vorhandenen Menge nicht zu bewältigen ist. In einem solchen Fall ist die Druckgasflasche für diesen Benutzer "leer", während der Flascheninhalt für die Zwecke anderer Benutzer noch für eine gewisse Zeit ausreichen würde. Ein anderes Beispiel ist eine Druckgasflaschenanordnung, die beschädigt oder verschmutzt ist und nach Auffassung des Benutzers ausgetauscht werden sollte. Ein wieder anderes Beispiel besteht in dem Wunsch eines Abfüllers, eine frisch gefüllte und getestete Druckgasflaschenanordnung als solche zu kennzeichnen und einer digitalen Fernüberwachung zugänglich zu machen. Weiterhin ist es denkbar, dass ein Benutzer mitteilen möchte, dass eine Druckgasflasche lediglich vom Gaseanbieter abgeholt und nicht automatisch durch eine volle Flasche ersetzt wird, beispielsweise nach Beendigung von Arbeiten, für die er das entsprechende Gas benötigte.

Es besteht also das Bedürfnis, subjektive Auffassungen von Benutzern bei einer Fernüberwachung der Betriebszustände von Druckgasflaschenanordnungen einzubeziehen, was zugleich Aufgabe der vorliegenden Erfindung ist.

Gelöst ist diese Aufgabe durch ein System zum Fernüberwachen einer Druckgasflaschenanordnung mit den Merkmalen des Patentanspruchs 1 sowie durch ein Verfahren mit den Merkmalen des Patentanspruchs 8. Vorteilhafte Ausgestaltungen der Erfindung sind in den Unteransprüchen angegeben.

Ein System zum Kennzeichnen und Fernüberwachung einer Druckgasflaschenanordnung ist also mit einer manuell einstellbaren Anzeigeeinheit zum Einstellen einer Zustandsanzeige zwecks Kenntlichmachung eines Zustandes der Druckgasflaschenanordnung und einer mit der Anzeigeeinheit zusammenwirkenden Erfassungs- und Kommunikationseinheit ausgerüstet, die einen Sensor zum Erfassen der Einstellung der Anzeigeeinheit sowie eine Sendeeinheit zum drahtlosen Übertragen eines digitalen Signals an eine Empfangseinheit umfasst, wobei das digitale Signal eine vom Sensor erfasste Information über die Zustandsanzeige oder eine Änderung der Zustandsanzeige sowie eine Flaschenkennung enthält und die Empfangseinheit mit einer zentralen Steuereinheit in Datenverbindung bringbar und mit einer Auswertesoftware ausgerüstet ist, die so ausgebildet ist, dass sie bei einer von der Erfassungs- und Kommunikationseinheit übermittelten Information über eine Änderung der Zustandsanzeige die Empfangseinheit zur Abgabe eines Signals an die Steuereinheit veranlasst, welches eine Angabe der geänderten Zustandsanzeige und einer Flaschenkennung enthält.

Das erfindungsgemäße System zum Kennzeichnen und Fernüberwachung einer Druckgasflaschenanordnung umfasst also eine manuell zu betätigende Anzeigeeinheit, eine Erfassungs- und Kommunikationseinheit, eine Empfangseinheit und eine Steuereinheit.

An der Anzeigeeinheit kann eine Anzahl unterschiedlicher Zustandsanzeigen von einem Benutzer manuell eingestellt werden. Beispielsweise kann die Anzeigeeinheit Zustandsanzeigen für "leer", "leer ohne Wiederbestellung", "voll", "voll und geprüft", "beschädigt", etc. umfassen. Die jeweilige Einstellung der Anzeigeeinheit und/oder deren Änderung werden von der Erfassungs- und Kommunikationseinheit erfasst. Dabei wird entweder in vorgegebenen Zeitabständen eine Messung der Einstellung der Anzeigeeinheit vorgenommen, oder ein Sensor der Erfassungs- und Kommunikationseinheit erfasst eine Änderung der Einstellung der Anzeigeeinheit. Die Erfassungs- und Kommunikationseinheit sendet entsprechende Signale sowie eine Kennung der Druckgasflaschenanordnung an die Empfangseinheit, in der mittels der Auswertesoftware die Zustände interpretiert werden. Für die Interpretation bestehen folgende Möglichkeiten: Entweder werden aufeinanderfolgende Signale, die erfassten Zustandsanzeigen entsprechen, miteinander oder mit einer in einem Speicher der Empfangseinheit eingespeicherten Signalen verglichen, die den an der Anzeigeeinheit einstellbaren Zuständen entsprechen, oder es wird von der Erfassungs- und Kommunikationseinheit im Falle einer Änderung der Zustandsanzeige ein entsprechendes Signal abgesendet. Wenn - in beiden Fällen - von der Auswertesoftware der Empfangseinheit eine Änderung der Zustandsanzeige erkannt wird, veranlasst sie die Abgabe eines entsprechenden Signals an die Steuereinheit, zusammen mit eine Kennung, die die Druckgasflaschenanordnung identifiziert. In der Steuereinheit liegt eine Datenbank mit Informationen über Zustandsanzeigen von Druckgasflaschenanordnungen vor, die durch die übermittelten Signale der mit der Steuereinheit in Datenaustausch stehenden Empfangseinheiten laufend aktualisiert werden. Einer Bedienperson der Steuereinheit kann die Änderung einer Zustandsanzeige durch ein akustisches oder optisches Signal angezeigt werden. Dies ermöglicht es der Bedienperson, geeignete Maßnahmen zu ergreifen, wie beispielsweise das Auswechseln der als "leer" erkannten Druckgasflaschenanordnung zu veranlassen.

Eine Empfangseinheit steht bevorzugt jeweils mit mehreren Erfassungs- und Kommunikationseinheiten in Datenverbindung. Beispielsweise werden in der Empfangseinheit die Zustandsanzeigen von Druckgasflaschenanordnungen innerhalb eines begrenzten Raumes, beispielsweise einer Halle oder auf einem Transportfahrzeug, erfasst. Eine zweckmäßige Ausgestaltung sieht vor, dass eine Information über die Zustandsanzeige einer Druckgasflaschenanordnung automatisch einer Empfangseinheit übermittelt wird, sobald die Druckgasflaschenanordnung in den Empfangsbereich dieser Empfangseinheit gelangt.

Bevorzugt steht eine Steuereinheit mit mehreren Empfangseinheiten in Datenverbindung oder kann mit mehreren Empfangseinheiten in Datenverbindung treten. Dabei senden die Empfangseinheiten zweckmäßigerweise eine eigene Kennung an die Steuereinheit, die es einer Bedienperson ermöglicht, die erhaltenen Information über eine Druckgasflasche oder ein Flaschenbündel einer bestimmten Empfangseinheit und damit einem bestimmten Standort zuzuordnen, und somit eine Ortung der Druckgasflaschenanordnung erleichtert. In diesem Falle ist es darüber hinaus zweckmäßig, wenn über die Steuereinheit eine Datenverbindung zwischen Empfangseinheiten zu Zwecken des Datenabgleiches möglich ist - beispielsweise in Fällen, in denen durch Transport eine Druckgasflasche aus dem Empfangsbereich einer ersten Empfangseinheit in den einer anderen wechselt.

Bevorzugt ist als Sendeeinheit ein aktiver Sender vorgesehen. Die Übermittlung der Informationen erfolgt beispielsweise über Bluetooth, WiFi oder GSM. Die Sendeeinheit ist also derart ausgelegt, dass die von der Sensoreinheit erfassten Informationen in regelmäßigen Zeitabständen mit einem Intervall von beispielsweise 5s - 60s an die Empfangseinheit übertragen werden. Bevorzugt handelt es sich bei dem aktiven Sender um eine auf iBeacon basierende Einheit (ein sogenannter "Beacon"), die neben der Übertragung von Informationen auf eine mittlere Distanz von bis zu 100m auch eine Information über die Entfernung des Senders vom Empfänger übermittelt. Auf diese Weise werden zeitnah aktuelle Informationen über die erfassten Bewegungen übertragen. Anstelle der Verwendung von iBeacon kommen im Übrigen auch vergleichbare Sendeverfahren mit einem im Betrieb niedrigen Energieverbrauch ("low energy" Sendeverfahren) in Betracht und die bevorzugt eine Lebensdauer von mehreren Jahren haben; bei Bedarf kann auch eine Übertragungstechnologie mit größerem Sendebereich eingesetzt werden, die auch Distanzen von über 100m zur Sendeeinheit erlauben.

Alternativ zur regelmäßigen Absendung eines Signals durch die Sendeeinheit erfolgt die Übermittlung des Sendesignals erst nach Aufforderung durch ein entsprechendes Signal der Steuereinheit oder der Empfangseinheit an die Erfassungs- und Kommunikationseinheit. Hierzu ist die Erfassungs- und Kommunikationseinheit der Druckgasflaschenanordnung mit einem Empfänger ausgerüstet, der das Empfangen von Signalen der Steuereinheit bzw. der Empfangseinheit ermöglicht. Beispielsweise ermöglichen es entsprechende Programme in der Steuereinheit und der mit dieser Steuereinheit in Datenverbindung stehenden Empfangseinheiten, dass eine Bedienperson von der Steuereinheit aus den aktuellen Zustand einer bestimmten Druckgasflaschenanordnung "erfragt". Dazu sendet er von der Steuereinheit aus ein entsprechendes Signal zusammen mit einer Kennung der betreffenden Druckgasflasche an die mit der Steuereinheit in Datenverbindung stehenden Empfangseinheiten. Befindet sich die entsprechende Druckgasflasche im Empfangsbereich einer Empfangseinheit, teilt diese der Steuereinheit die angeforderte Information mit, sobald sie ihr vorliegt, also spätestens nach dem Empfang des nächsten, von der Sendeeinheit der Druckgasflaschenanordnung angegebenen Signals. In ähnlicher Weise können auch weitere Informationen von der Steuereinheit aus abgefragt werden, beispielsweise über die Anzahl oder den Standort von Druckgasflaschen mit einem bestimmten Status.

Eine besonders vorteilhafte Ausgestaltung der Erfindung sieht vor, dass als Empfangseinheit ein IOT-Gateway (IOT: "Internet of Things") vorgesehen ist, das über ein Kommunikationsnetzwerk, beispielsweise das Internet oder ein Telefonnetzwerk, mit der Steuereinheit datenverbunden ist. Mittels eines in der Steuereinheit vorliegenden Auswerteprogramms werden die empfangenen Daten ausgewertet und es können ggf. geeignete Maßnahmen eingeleitet werden. Beispielsweise enthält das Auswerteprogramm der Steuereinheit eine Datenbank mit Informationen über alle Druckgasflaschenanordnungen, die über die mit der Steuereinheit datenverbundenen stehenden Empfangseinheiten erfasst werden können. Die Datenbank der Auswertesoftware zeigt einer Bedienperson beispielsweise an, ob und welche Druckgasflaschen von einem Abfüller als "voll" gekennzeichnet und somit für den Vertrieb freigegeben sind oder ob ein Druckgasflaschenbündel von einem Kunden als "leer" gekennzeichnet wurde und somit abholbereit und ggf. durch ein gefülltes Bündel zu ersetzen ist. Das Auswerteprogramm ist beispielsweise als Software in einem ein mit dem IOT-Gateway datenverbundenen Rechner gespeichert (in diesem Falle entspricht der Rechner der Steuereinheit) oder als Internet-Applikation in einem Webserver der über mobile Endgeräte, wie beispielsweise Smartphones, dezentral mit mehreren IOT-Gateways kommuniziert (in diesem Falle entspricht der Webserver der Steuereinheit).

In einer besonders bevorzugten Ausgestaltung der Erfindung ist die Anzeigeeinheit und/oder die Sensoreinheit im Bereich eines Entnahmeventils der Druckgasflaschenanordnung angeordnet. Dies ermöglicht es einem Benutzer, die Anzeigeeinheit unmittelbar nach dem Öffnen oder Schließen des Entnahmeventils zu betätigten. Beispielsweise handelt es sich bei der Anzeigeeinheit um einen um unterhalb des Handrads montierten und drehbar um die Ventilspindel des Entnahmeventils angeordneten Ring mit Beschriftungsfeldern, auf denen die entsprechenden Zustandsanzeigen vermerkt sind. Die Erfindung ist jedoch nicht hierauf beschränkt; vielmehr kann die Anzeigeeinheit und die Erfassungs- und Kommunikationseinheit auch anders ausgestaltet sein und auch an anderen Bereichen der Druckgasflaschenanordnung angeordnet sein, beispielsweise am Gestell eines Druckgasflaschenbündels oder an einem Halsgewinde einer Druckgasflasche oder an einer das Entnahmeventil einfassenden Ventilschutzeinrichtung oder als Teil eines auf einer Druckgasflasche aufmontierten Ventils mit integriertem Druckregler (VIPR). Anzeigeeinheit und Erfassungs- und Kommunikationseinheit können im Übrigen auch in einem gemeinsamen Gehäuse integriert sein. Wesentlich für die Erfindung ist, dass eine manuelle Betätigung der Anzeigeeinheit erfasst, digitalisiert und als digitales Signal der Empfangseinheit bzw. der Steuereinheit übermittelt wird.

Bevorzugt umfasst die Anzeigeeinheit ein drehbeweglich, jedoch in mehreren Winkeleinstellungen arretierbar angeordnetes Element, und der Sensor der Sensoreinheit ist so ausgebildet, dass er eine Drehung des Elements erfasst. Die Arretierbarkeit bei mehreren Winkelstellungen ermöglicht eine einfache und zuverlässige Einstellung einer Mehrzahl von Zustandsanzeigen. Die Drehung des Elements, beispielsweise des zuvor erwähnten, mit Beschriftungsfeldern ausgerüsteten Rings, wird von der Sensoreinheit beispielsweise mittels eines Magnetsensors detektiert, dessen Signale eineindeutig mit der Einstellung des Elements korrespondieren. Bei einer Drehung des Elements wird somit ein Signal an die Empfangseinheit gesendet, das eine Änderung der Zustandsanzeige anzeigt.

Die Aufgabe der Erfindung wird auch durch ein Verfahren zum Fernüberwachen einer Druckgasflaschenanordnung mit einer an der Druckgasflaschenanordnung montierten, manuell einstellbaren Anzeigeeinheit zum Einstellen einer Zustandsanzeige zwecks manueller Kenntlichmachung eines Zustandes der Druckgasflaschenanordnung gelöst, bei dem eine Betätigung der Anzeigeeinheit von einem Sensor erfasst und in ein digitales Signal umgewandelt wird, das digitale Signal zusammen mit einer die Druckgasflaschenanordnung individualisierenden Kennung an eine Empfangseinheit übermittelt wird und bei einer in der Empfangseinheit festgestellten Änderung des angezeigten Zustands der Druckgasflaschenanordnung ein entsprechendes digitales Signal von der Empfangseinheit an eine Steuereinheit übermittelt wird.

Erfindungsgemäß wird eine vom Sensor erfasste manuelle Betätigung der Anzeigeeinheit als digitales Signal an eine Empfangseinheit übermittelt, oder der an der Anzeigeeinheit eingestellte Zustand wird vom Sensor kontinuierlich erfasst und der Empfangseinheit in vorgegeben Zeitabständen von z.B. 5 bis 60s Dauer übermittelt. Im Falle einer Änderung des an der Anzeigeeinheit angezeigten Zustands wird ein Signal zusammen mit einer Kennung der Druckgasflaschenanordnung und einer Kennung der Empfangseinheit an die zentrale Steuereinheit übermittelt. In einer bevorzugten Weiterbildung sind Steuereinheit und Empfangseinheit so ausgebildet, dass der übermittelte angezeigte Flaschenzustand einer Druckgasflaschenanordnung in der Empfangseinheit gespeichert und dort von der Steuereinheit abgerufen werden kann. Weiterhin kann das Auswerteprogramm in der Empfangseinheit auch so ausgebildet sein, dass weitere Informationen selbsttätig an die Steuereinheit übermittelt werden, wie beispielsweise Informationen über eine vom Sensor erfasste und übermittelte Fehlfunktion oder Beschädigung der Druckgasflaschenanordnung. Mittels eines Auswerteprogramms in der zentralen Steuereinheit wird die Änderung der Zustandsanzeige zusammen mit einer Kennung der Druckgasflasche und einer Kennung der Empfangseinheit für eine Bedienperson der Steuereinheit sichtbar gemacht und ermöglicht so das Einleiten entsprechender Maßnahmen, wie z.B. den Austausch einer von einem Kunden als "leer" markierten Druckgasflaschenanordnung.

Die Erfindung ist insbesondere für die Nachrüstung von bereits vorhandenen Druckgasflaschenanordnungen geeignet. Anzeigeeinheit sowie Erfassungs- und Kommunikationseinheit können in einfacher Weise an der Druckgasflaschenanordnung montiert werden, beispielsweise durch Aufkleben oder Anklemmen am Entnahmeventil oder durch Befestigen am Halsring einer Druckgasflasche. Ein Eingriff in sicherheitsrelevante Teile der Druckgasflaschenanordnung ist dafür nicht erforderlich. Empfangseinheiten, können in einfacher Weise in dafür geeigneten Räumlichkeiten montiert werden, beispielsweise in Lagerräumen, auf Transportfahrzeugen oder in Arbeitsräumen eines Kunden und ermöglichen auf diese Weise eine zumindest annähernd unterbrechungslose Erfassung der eingestellten Zustandsanzeigen einer Vielzahl von Druckgasflaschenanordnungen an einer mit den Empfangseinheiten datenverbundenen Steuereinheit.

Anhand der Zeichnungen soll ein Ausführungsbeispiel der Erfindung näher erläutert werden. In schematischen Ansichten zeigen:
Fig.1: Eine erfindungsgemäßes System zum Kennzeichnen und Fernüberwachung einer Druckgasflasche,
Fig. 2: den Aufbau der Erfassungs- und Kommunikationseinheit des Systems aus Fig. 1.

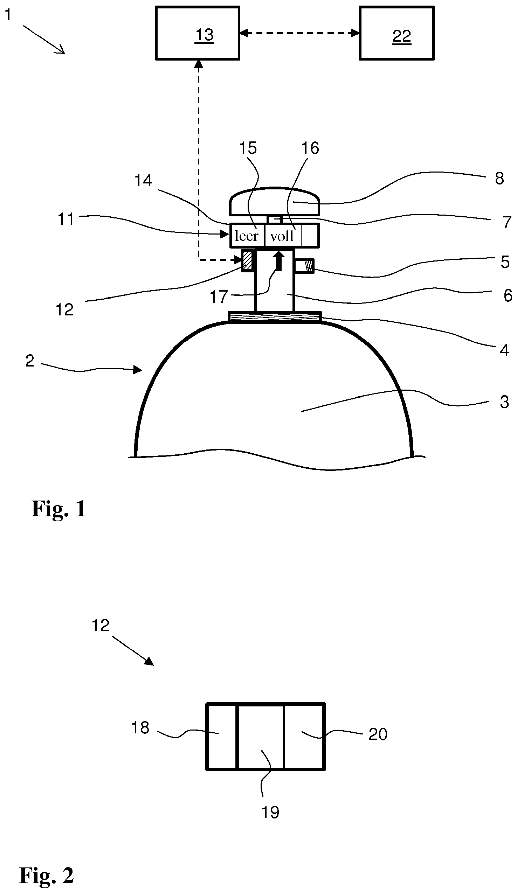

Das in Fig. 1 gezeigte System 1, im Folgenden "Fernüberwachungssystem" genannt, dient zur Kennzeichnung und Fernüberwachung von an einer Druckgasflaschenanordnung, im Ausführungsbeispiel einer Druckgasflasche 2 eingestellten Zustandsanzeigen. Die Druckgasflasche 2 umfasst in an sich bekannter Weise einen hier nur ausschnittsweise dargestellten Flaschenkörper 3 mit Halsgewinde 4 sowie ein mit einem Entnahmeanschluss 5 ausgerüstetes Entnahmeventil 6, auf dessen Ventilspindel 7 ein Handrad 8 aufgesetzt ist.

Das Fernüberwachungssystem 1 umfasst eine Anzeigeeinheit 11 zum manuellen Einstellen von Zustandsanzeigen der Druckgasflasche 2 und eine mit der Anzeigeeinheit 11 zusammenwirkende Erfassungs- und Kommunikationseinheit 12 zum Erfassen und digitalisieren der an der Anzeigeeinheit 11 eingestellten Zustandsanzeigen und Übermitteln der digitalisierten Zustandsanzeigen an eine Empfangseinheit 13.

Die Anzeigeeinheit 11 besteht im Ausführungsbeispiel aus einem Anzeigering 14, der im Bereich der Ventilspindel 7 drehbar gelagert ist. Außenseitig ist der Anzeigenring 14 mit mehreren Beschriftungsfeldern 15, 16 versehen, auf denen jeweils unterschiedliche, manuell einstellbare Zustände angezeigt werden, wie beispielsweise "voll", "leer", "frisch abgefüllt", "defekt" usw. Das Einstellen der Zustandsanzeige erfolgt durch Drehung des Anzeigenrings 14 derart, dass der gewählte Zustand von einem am Entnahmeventil 5 angebrachten Pfeil 17 angezeigt wird. Weiterhin ist der Anzeigenring 14 mit einer Einrichtung ausgerüstet, die den Anzeigenring bei bestimmten Winkelstellungen, die jeweils mit einer Zustandsanzeige verknüpft sind, arretiert. Beispielsweise handelt es sich dabei um (hier nicht gezeigte) Rastnuten, die in vorgegebenen Winkelabständen am Anzeigenring 14 angeordnet sind, und die mit einem entsprechenden (hier gleichfalls nicht gezeigten) Rastelement zusammenwirken.

Die Erfassungs- und Kommunikationseinheit 12 umfasst, wie in Fig. 2 gezeigt, einen zum Erfassen einer Bewegung des Anzeigenrings 14 geeigneten Sensor 18, beispielsweise einen Magnetsensor, der mit einem am Anzeigenring 14 montierten Magneten (hier nicht gezeigt), zusammenwirkt. Weiterhin umfasst die Erfassungs- und Kommunikationseinheit 12 eine Wandlereinheit 19, in der die Signale des Sensors 18 in digitale Signale umgewandelt werden, sowie eine Sendeeinheit 20 zum drahtlosen Übermitteln der von der Wandlereinheit 19 erzeugten digitalen Signale an die Empfangseinheit 13. Es ist im Übrigen nicht erforderlich, die Erfassungs- und Kommunikationseinheit 12 so, wie in Fig. 1 gezeigt, räumlich beabstandet von der Anzeigeeinheit 11 anzuordnen, sondern es ist beispielsweise auch möglich, die Erfassungs- und Kommunikationseinheit 12 innerhalb des Anzeigenrings 14 anzuordnen oder die Anzeigeeinheit 11 und die Erfassungs- und Kommunikationseinheit 12 zu einem einheitlichen Bauteil mit einem gemeinsamen Gehäuse zusammenzufassen, um auf diese Weise eine besonders kompakte Anordnung zu erzielen.

Die Sendeeinheit 20 der Erfassungs- und Kommunikationseinheit 12 steht in drahtloser Datenverbindung mit der Empfangseinheit 13, beispielsweise über Bluetooth oder WiFi. Die Empfangseinheit 13 steht ihrerseits mit einer Steuereinheit 22 über eine bevorzugt drahtlose Verbindung, beispielsweise einer Internetverbindung, in Datenaustausch.

Im Betrieb des Fernüberwachungssystems 1 wird eine an der Anzeigeeinheit 11 durch Einstellung des Anzeigenrings 14 manuell eingestellte Zustandsanzeige vom Sensor 18 erfasst. Dabei erfolgt entweder eine regelmäßige Messung der Anzeigeeinheit 11 durch den Sensor 18, oder der Sensor 18 spricht bei einer Änderung der Anzeigeeinheit 11 an, im Ausführungsbeispiel bei einer detektierten Drehbewegung des Anzeigenrings 14. Nach Digitalisierung in der Wandlereinheit 19 wird das entsprechende digitale Signal von der Sendeeinheit 20 an die Empfangseinheit 13 übertragen. In der Empfangseinheit 13 prüft ein Programm nach einem vorgegebenen Algorithmus, ob das von der Sendeeinheit übermittelte Signal einer Änderung der Zustandsanzeige entspricht. Ist dies der Fall, veranlasst das Programm die Absendung eines Signals von der Empfangseinheit 13 an die Steuereinheit 22. Dieses Signal enthält eine Information über die Identität der Druckgasflasche 10 und/oder der Empfangseinheit 13 sowie eine Information über die geänderte Zustandsanzeige der Druckgasflasche 2. In einer in der Steuereinheit 22 vorliegenden Datenbank wird dann automatisch ein dort vorliegender Eintrag über den Zustand der Druckgasflasche 2 aktualisiert.

Die Steuereinheit 22 steht mit mehreren Empfangseinheiten 13 in Datenverbindung, die jeweils eine Mehrzahl an Druckgasflaschen 2 und/oder Druckgasflaschenbündeln überwachen, die sich in einem bestimmten räumlich abgegrenzten Bereich befinden, beispielsweise in einer Werks- oder Lagerhalle eines Kunden oder eines Gaselieferanten, oder in einem Abschnitt einer Abfüllanlage. Durch das erfindungsgemäße Fernüberwachungssystem 1 werden in der Datenbank der Steuereinheit 22 die dort vermerkten Zustandsanzeigen all dieser Druckgasflaschenanordnungen laufend aktualisiert. Auf diese Weise kann sich eine Bedienperson rasch einen Überblick über die vorliegenden Flaschenzustände beschaffen, beispielsweise über die Anzahl abgefüllter und geprüfter Druckgasflaschen oder über Zahl und Standort von bei einem Kunden als leer gekennzeichneten und daher auszutauschenden Druckgasflaschenanordnungen.

Die erfindungsgemäße Fernüberwachung von manuell eingestellten Zustandsanzeigen einer Druckgasflaschenanordnung kann im Übrigen ergänzend zu anderen Formen der Fernüberwachung eingesetzt werden, bei denen beispielsweise der Öffnungszustand eines Entnahmeventils die Bewegung eines Handrads, der Druck, oder die Temperatur oder weitere Daten der Druckgasflaschenanordnung erfasst und die entsprechenden Informationen der Steuereinheit übermittelt werden.

### Bezugszeichenliste:

- 1: System
- 2: Druckgasflasche
- 3: Flaschenkörper
- 4: Halsgewinde
- 5: Entnahmeanschluss
- 6: Entnahmeventil
- 7: Ventilspindel
- 8: Handrad
- 9: _
- 10: Fernüberwachungssystem
- 11: Anzeigeeinheit
- 12: Erfassungs- und Kommunikationseinheit
- 13: Empfangseinheit
- 14: Anzeigenring
- 15: Beschriftungsfeld
- 16: Beschriftungsfeld
- 17: Pfeil
- 18: Sensor
- 19: Wandlereinheit
- 20: Sendeeinheit
- 21: -
- 22: Steuereinheit

## Patentansprüche

1. System zum Fernüberwachen von Druckgasflaschenanordnungen (2), mit einer Mehrzahl von Empfangseinheiten (13) und einer zentralen Steuereinheit (22), wobei die Druckgasflaschenanordnungen (2) jeweils mit einer an der Druckgasflaschenanordnung (2) montierten, manuell einstellbaren Anzeigeeinheit (11) und einer mit der Anzeigeeinheit (11) zusammenwirkenden Erfassungs- und Kommunikationseinheit (12), die einen Sensor (18) zum Erfassen der Einstellung der Anzeigeeinheit (11) sowie eine Sendeeinheit (20) zum drahtlosen Übertragen eines die vom Sensor (18) erfasste Information über die Zustandsanzeige sowie eine Flaschenkennung umfassenden Signals an eine Empfangseinheit (13) umfasst, ausgerüstet sind, wobei die Empfangseinheiten (13) mit der zentralen Steuereinheit (22) in Datenverbindung bringbar und mit einer Auswertesoftware ausgerüstet sind, die so ausgebildet ist, dass sie bei einer von der Erfassungs- und Kommunikationseinheit (12) einer Druckgasflaschenanordnung (2) übermittelten Information über eine Änderung der Zustandsanzeige eine mit der Erfassungs- und Kommunikationseinheit (12) dieser Druckgasflaschenanordnung (2) in Datenverbindung stehenden Empfangseinheit (13) zur Abgabe eines Signals an die Steuereinheit (22) veranlasst, das eine Angabe der geänderten Zustandsanzeige, einer Flaschenkennung und einer Kennung der Empfangseinheit (13) enthält, wobei die Anzeigeeinheit (11) zum Einstellen einer Anzahl unterschiedlicher Zustandsanzeigen zwecks manueller Kenntlichmachung eines Zustandes der Druckgasflaschenanordnung (2) bestimmt ist.

2. System nach Anspruch 1, **dadurch gekennzeichnet, dass** als Sendeeinheit (20) ein aktiver Sender, etwa ein iBeacon, vorgesehen ist.

3. System nach einem der vorhergehenden Ansprüche, **dadurch gekennzeichnet, dass** als Empfangseinheit (13) ein IOT-Gateway vorgesehen ist, das über ein Kommunikationsnetzwerk mit einem Auswerteprogramm der Steuereinheit (22) datenverbunden ist.

4. System nach einem der vorhergehenden Ansprüche, **dadurch gekennzeichnet, dass** Steuereinheit (22), die Empfangseinheiten (13) und die Erfassungs- und Kommunikationseinheit (12) jeder Druckgasflaschenanordnung (2) so ausgebildet sind, dass die Informationen über erfassten Zustandsanzeigen und/oder über erfasste Änderungen der Zustandsanzeige selbsttätig in regelmäßigen Zeitabständen an die mit der jeweiligen Erfassungs- und Kommunikationseinheit (12) in Datenverbindung stehenden Empfangseinheit (13) übermittelt oder auf Abruf durch die Steuereinheit (22) vorgehalten werden.

5. System nach einem der vorhergehenden Ansprüche, **dadurch gekennzeichnet, dass** die Steuereinheit (22) mit einer Sendeeinheit, und die Empfangseinheiten (13) und/oder die Erfassungs- und Kommunikationseinheiten (12) der Druckgasflaschenanordnungen (2) jeweils mit einem Empfänger ausgerüstet sind, die das Empfangen von Signalen der Steuereinheit (22) bzw. der Empfangseinheit (13) ermöglichen.

6. System nach einem der vorhergehenden Ansprüche, **dadurch gekennzeichnet, dass** die Anzeigeeinheit (11) und/oder die Erfassungs- und Kommunikationseinheit (12) im Bereich eines Entnahmeventils (6) der Druckgasflaschenanordnung (2) angeordnet ist.

7. System nach einem der vorhergehenden Ansprüche, **dadurch gekennzeichnet, dass** die Anzeigeeinheit (11) ein drehbeweglich, jedoch in mehreren Stufen arretierbar angeordnetes Element (14) umfasst und der Sensor (18) der die Erfassungs- und Kommunikationseinheit (12) so ausgebildet ist, dass er eine Drehung des Elements (14) erfasst.

8. Verfahren zum Fernüberwachen von Druckgasflaschenanordnungen (2) mit einer an den Druckgasflaschenanordnungen (2) jeweils montierten, manuell einstellbaren Anzeigeeinheit (11) zum Einstellen einer Anzahl unterschiedlicher Zustandsanzeigen (2), bei der ein Zustand einer Druckgasflaschenanordnung (2) durch eine Betätigung der Anzeigeeinheit (11) manuell kenntlich gemacht wird, die Betätigung der Anzeigeeinheit (11) von einem Sensor erfasst und in ein digitales Signal umgewandelt wird, das digitale Signal zusammen mit einer die Druckgasflaschenanordnung (2) individualisierenden Kennung an eine Empfangseinheit (13) übermittelt wird, und bei einer in der Empfangseinheit (13) festgestellten Änderung des angezeigten Zustands der Druckgasflaschenanordnung (2) ein entsprechendes digitales Signal von der Empfangseinheit (13) zusammen mit einer eigenen Kennung der Empfangseinheit (13) an eine zentrale Steuereinheit (22) übermittelt wird.

## Claims

1. System for remotely monitoring compressed gas cylinder arrangements (2), having a plurality of receiving units (13) and a central control unit (22), wherein the compressed gas cylinder arrangements (2) are each equipped with a manually adjustable display unit (11) mounted on the compressed gas cylinder arrangement (2) and with a detection and communication unit (12), interacting with the display unit (11), that comprises a sensor (18) for detecting the setting of the display unit (11) and also a transmitting unit (20) for wirelessly transmitting a signal comprising the information detected by the sensor (18) about the state display and a cylinder identifier to a receiving unit (13), wherein the receiving units (13) are able to be connected to the central control unit (22) for data transmission purposes and are equipped with evaluation software designed such that information about a change of the state display that is conveyed by the detection and communication unit (12) of a compressed gas cylinder arrangement (2) results in said evaluation software prompting a receiving unit (13) connected to the detection and communication unit (12) of this compressed gas cylinder arrangement (2) for data transmission purposes to deliver a signal to the control unit (22) that contains an indication of the changed state display, of a cylinder identifier and of an identifier of the receiving unit (13), wherein the display unit (11) is intended to set a number of different state displays for the purpose of manual identification of a state of the compressed gas cylinder arrangement (2).

2. System according to Claim 1, **characterized in that** the transmitting unit (20) provided is an active transmitter, for example an iBeacon.

3. System according to either of the preceding claims, **characterized in that** the receiving unit (13) provided is an IOT gateway connected to an evaluation program of the control unit (22) via a communication network for data transmission purposes.

4. System according to one of the preceding claims, **characterized in that** the control unit (22), the receiving units (13) and the detection and communication unit (12) of each compressed gas cylinder arrangement (2) are designed such that the information about detected state displays and/or about detected changes of the state display is automatically conveyed at regular intervals of time to the receiving unit (13) connected to the respective detection and communication unit (12) for data transmission purposes or is kept for retrieval by the control unit (22).

5. System according to one of the preceding claims, **characterized in that** the control unit (22) is equipped with a transmitting unit, and the receiving units (13) and/or the detection and communication units (12) of the compressed gas cylinder arrangements (2) are each equipped with a receiver, which allow signals of the control unit (22) or of the receiving unit (13) to be received.

6. System according to one of the preceding claims, **characterized in that** the display unit (11) and/or the detection and communication unit (12) is arranged in the region of a bleed valve (6) of the compressed gas cylinder arrangement (2).

7. System according to one of the preceding claims, **characterized in that** the display unit (11) comprises an element (14) arranged so as to rotate, but in a manner lockable in multiple steps, and the sensor (18) of the detection and communication unit (12) is designed such that it detects a rotation of the element (14) .

8. Method for remotely monitoring compressed gas cylinder arrangements (2) having a manually adjustable display unit (11), mounted on each of the compressed gas cylinder arrangements (2), for setting a number of different state displays (2), in which a state of a compressed gas cylinder arrangement (2) is manually identified by operating the display unit (11), the operation of the display unit (11) is detected by a sensor and converted into a digital signal, the digital signal is transmitted together with an identifier individualizing the compressed gas cylinder arrangement (2) to a receiving unit (13), and a change of the displayed state of the compressed gas cylinder arrangement (2) determined in the receiving unit (13) results in a corresponding digital signal being conveyed from the receiving unit (13) to a central control unit (22) together with an individual identifier of the receiving unit (13).

## Revendications

1. Système de télésurveillance d'ensembles de bouteilles de gaz sous pression (2), ledit système comprenant une pluralité d'unités de réception (13) et une unité de commande centrale (22), les ensembles de bouteilles de gaz sous pression (2) étant équipés chacun d'une unité d'affichage (11) réglable manuellement et montée sur l'ensemble de bouteilles de gaz sous pression (2) et d'une unité de détection et de communication (12) qui coopère avec l'unité d'affichage (11) et qui comprend un capteur (18) destiné à détecter le réglage de l'unité d'affichage (11) et une unité d'émission (20) destinée à la transmission sans fil, à une unité de réception (13), d'un signal comprenant l'information acquise par le capteur (18) et relative à l'affichage d'état et à un identifiant de bouteille, les unités de réception (13) pouvant être mises en liaison de données avec l'unité de commande centrale (22) et étant équipées d'un logiciel d'évaluation qui est conçu de telle sorte que, lorsqu'une information relative à un changement d'affichage d'état est transmise par l'unité de détection et de communication (12) d'un ensemble de bouteilles de gaz sous pression (2), une unité de réception (13), en liaison de données avec l'unité de détection et de communication (12) de cet ensemble de bouteilles de gaz sous pression (2) ordonne de délivrer à l'unité de commande (22) un signal qui contient une donnée relative à l'affichage d'état modifié, un identifiant de bouteille et un identifiant de l'unité de réception (13), l'unité d'affichage (11) étant destinée à régler un certain nombre d'affichages d'état différents dans le but d'identifier manuellement un état de l'ensemble de bouteilles de gaz sous pression (2).

2. Système selon la revendication 1, **caractérisé en ce qu'**un émetteur actif, tel qu'une iBeacon, est prévu comme unité d'émission (20).

3. Système selon l'une des revendications précédentes, **caractérisé en ce qu'**il est prévu comme unité de réception (13) une passerelle IOT qui est en liaison de données avec un programme d'évaluation de l'unité de commande (22) par le biais d'un réseau de communication.

4. Système selon l'une des revendications précédentes, **caractérisé en ce que** l'unité de commande (22), les unités de réception (13) et l'unité de détection et de communication (12) de chaque ensemble de bouteilles de gaz sous pression (2) sont conçues de telle sorte que les informations relatives à des affichages d'état détectés et/ou à des changements détectés dans l'affichage d'état soient transmises automatiquement à intervalles de temps réguliers, ou présentées sur demande effectuée par l'unité de commande (22), à l'unité de réception (13), qui est en liaison de données avec l'unité de détection et de communication respective (12).

5. Système selon l'une des revendications précédentes, **caractérisé en ce que** l'unité de commande (22) est équipée d'une unité d'émission, et les unités de réception (13) et/ou les unités de détection et de communication (12) des ensembles de bouteilles de gaz sous pression (2) sont équipées chacune d'un récepteur qui permet de recevoir des signaux de l'unité de commande (22) ou de l'unité de réception (13).

6. Système selon l'une des revendications précédentes, **caractérisé en ce que** l'unité d'affichage (11) et/ou l'unité de détection et de communication (12) est disposée dans la région d'une soupape de prélèvement (6) de l'ensemble de bouteilles de gaz sous pression (2).

7. Système selon l'une des revendications précédentes, **caractérisé en ce que** l'unité d'affichage (11) comprend un élément (14) qui est disposé de manière à être mobile en rotation, mais blocable sur plusieurs niveaux et le capteur (18) de l'unité de détection et de communication (12) est conçu de façon à détecter une rotation de l'élément (14).

8. Procédé de télésurveillance d'ensembles de bouteilles de gaz sous pression (2) comprenant une unité d'affichage (11) qui est réglable manuellement, qui est montée sur chacun des ensembles de bouteilles de gaz sous pression (2) pour régler un certain nombre d'affichages d'état différents (2) et dans laquelle un état d'un ensemble de bouteilles de gaz sous pression (2) est identifié manuellement par commande de l'unité d'affichage (11), la commande de l'unité d'affichage (11) est détectée par un capteur et est convertie en un signal numérique, le signal numérique est transmis à une unité de réception (13) conjointement avec un identifiant qui individualise l'ensemble de bouteilles de gaz sous pression (2) et, lorsqu'un changement de l'état affiché de l'ensemble de bouteilles de gaz sous pression (2) est détecté dans l'unité de réception (13), un signal numérique correspondant est transmis de l'unité de réception (13) à une unité de commande centrale (22) conjointement avec un identifiant propre de l'unité de réception (13).
